# EUROPEAN PATENT SPECIFICATION

(11) **EP 3 568 608 B1**
(45) Date of publication and mention of the grant of the patent: **29.03.2023**
(21) Application number: 17891111.1
(22) Date of filing: 12.01.2017
(51) Int. Cl.: F16F 15/023, F16F 15/06

(54) **ADJUSTABLE NEGATIVE STIFFINESS MECHANISMS**
EINSTELLBARE NEGATIVE STEIFIGKEITSMECHANISMEN
MÉCANISMES À RIGIDITÉ NÉGATIVE RÉGLABLE

(43) Date of publication of application: 20.11.2019
(73) Proprietor: HRL Laboratories, LLC, Malibu, CA 90265 (US)
(72) Inventor: CHURCHILL, Christopher, B., Ventura, CA 93001 (US); SENNOTT, Casey, J., Calabasas, CA 91032 (US); SMITH, Sloan, P., Calabasas, CA 91302 (US); SHAHAN, David, W., Los Angeles, CA 90025 (US); MCKNIGHT, Geoffrey, P., Los Angeles, CA 90066 (US)
(74) Representative: Grünecker Patent- und Rechtsanwälte PartG mbB
(86) International application number: PCT/US2017/013219
(87) International publication number: WO 2018/132101

(56) References cited:
- WO-A1-91/02921
- WO-A1-2016/093810
- WO-A2-2015/130367
- GB-A- 2 076 502
- US-A1- 2010 009 796
- US-A1- 2013 079 159
- US-B1- 6 234 127
- US-B1- 9 394 950
- US-B2- 7 338 398

## Description

### FIELD

The following description relates generally to negative stiffness mechanisms and, more particularly, to adjustable negative stiffness mechanisms.

### BACKGROUND

A variety of non-linear structures exhibit negative mechanical stiffness, such as snap-through beams and buckling beams. Negative stiffness may also be exhibited by various combinations and arrangements of springs and/or beams with pinned or clamped boundaries. For instance, negative stiffness may be exhibited due to over-rotation of one of the components, or rolling or sliding contact between components. Negative stiffness mechanisms are useful in a variety of applications, including vibration isolation, shock mitigation, and signal processing.

However, many related art negative stiffness mechanisms do not incorporate a variable negative stiffness spring. For instance, related art negative stiffness mechanisms may incorporate an external cam to change the effective length of a lever attached to a variable stiffness spring or a variable pivot point for a leveraged spring. Other related art negative stiffness mechanisms include a variable stiffness spring having a lever supported by antagonistic non-linear springs (e.g., rubber cones). However, each of these related art negative stiffness mechanisms are incapable of supporting a significant load when the mechanism is soft, which make them of limited use as an isolator.

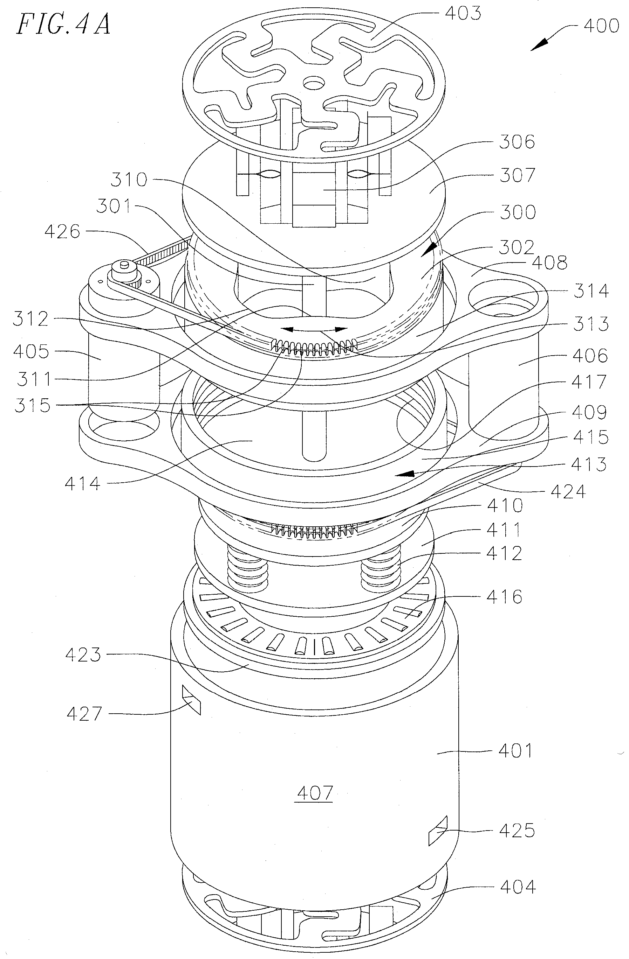

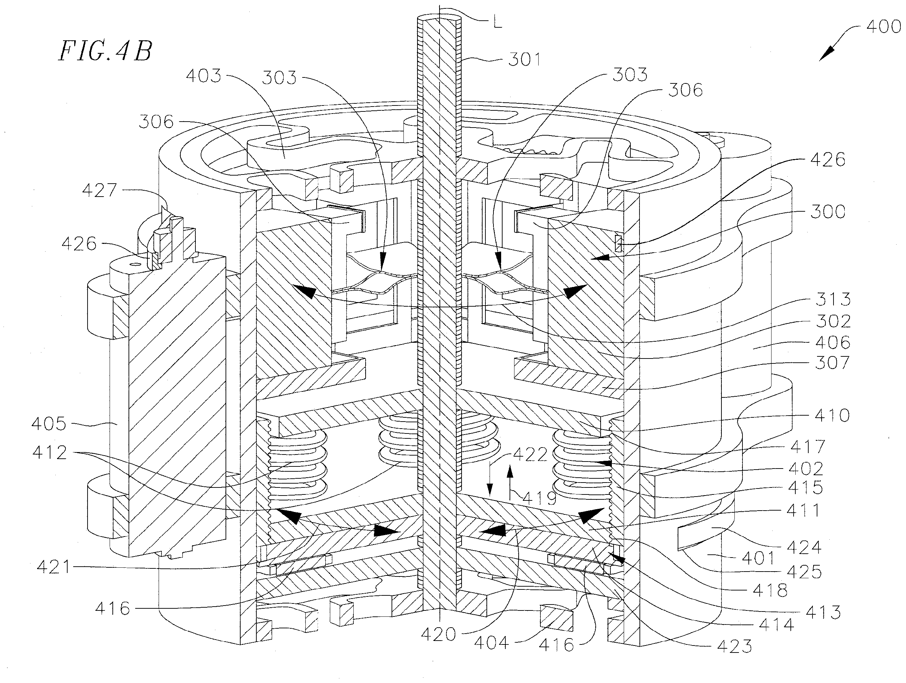

Additionally, other related art negative stiffness mechanisms may incorporate pneumatic, hydraulic, hydropneumatic, voice coil, and/or piezoelectric components. However, related art negative stiffness mechanisms that incorporate pneumatic components may require large volume air springs and high-friction seals, which prevent isolation of low amplitude vibrations. Additionally, related art negative stiffness mechanisms that incorporate voice coil or piezoelectric components may not be capable of isolating larger amplitude vibrations.
WO9102921 discloses a vibration isolation system that utilizes various configurations of elastic structures loaded to approach a point of elastic instability. In particular, WO 91/02921 discloses a negative stiffness mechanism according to the preamble of claims 1 and 3. In one form, the system uses a combination of a negative-stiffness mechanism and a positive spring to support a payload and provide zero or near-zero net stiffness in the vertical direction. Horizontal motion is generally isolated by utilizing one or more axially-symmetric columns loaded near their critical buckling loads to provide little or no stiffness in any horizontal direction. Preventive stops limit displacements to keep the columns from collapsing under abnormal loads.
The present invention is defined only in the appended independent claims. For example, Figs. 4 to 6 describe aspects of the present invention. Further examples or embodiment mentioned in the following description that do not necessarily fall under the scope of the appended claims are to be construed as comparative examples useful for understanding the present invention.

### SUMMARY

The present disclosure is directed to various embodiments of an adjustable negative stiffness mechanism. In one embodiment, the adjustable negative stiffness mechanism includes a central shaft, an outer annular member extending around the central shaft, at least two negative stiffness elements extending between the central shaft and the outer annular member, each of the at least two negative stiffness elements having an inner end coupled to the central shaft and an outer end engaging the outer annular member, and an actuator coupled to the at least two negative stiffness elements. The actuator is configured to compress and expand the at least two negative stiffness elements to adjust a negative stiffness mechanical response exhibited by the at least two negative stiffness elements. The actuator may include a hydraulic or pneumatic bladder configured to move between an inflated state to compress the at least two negative stiffness elements and a deflated state to expand the at least two negative stiffness elements. The actuator may include a pair of corresponding wedge-shaped members. A first wedge-shaped member of the pair of wedge-shaped members may be configured to slide relative to a second wedge-shaped member of the pair of wedge-shaped members. The actuator may include an inner cam surface on the annular member configured to engage the outer ends of the at least two negative stiffness elements and a motor operatively coupled to the annular member to rotate the annular member around the central shaft. The inner cam surface includes at least one peak and at least one recess. The rotation of the annular member around the central shaft alternately aligns the at least one peak on the cam surface with the negative stiffness elements to compress the negative stiffness elements and aligns the at least one recess on the cam surface to expand the negative stiffness elements. The actuator may also include a flexure coupled to the outer end of each of the at least two negative stiffness members. Each of the flexures is configured permit movement of the outer ends of the negative stiffness members in a first direction and prevent movement of the outer ends of the negative stiffness members in a second direction perpendicular to the first direction. The actuator may include a series of tracks defined in the annular member and a motor operatively coupled to the annular member. Each of the tracks has a first end spaced apart from the central shaft by a first distance and a second end spaced apart from the central shaft by a second distance greater than the first distance. The outer end of each of the negative stiffness elements is slidably received in one of the tracks. The motor is configured to rotate the annular member around the central shaft and move the outer ends of the negative stiffness elements between the first and second ends of the tracks in the annular member. The adjustable negative stiffness mechanism may also include at least one ortho-planar spring extending between the central shaft and the outer annular member. The adjustable negative stiffness mechanism may also include at least one coil spring coupled to the central shaft. Each of the at least two negative stiffness members may include a first beam buckled in a first direction and a second plate buckled in a second direction opposite the first direction.

An adjustable negative stiffness mechanism according to another embodiment of the present disclosure includes a central shaft, an outer annular member extending around the central shaft, at least two negative stiffness elements extending between the central shaft and the annular member, a flexure coupled to the outer end of each of the at least two negative stiffness members, and a first motor operatively coupled to the outer annular member to rotate the outer annular member around the central shaft. The outer annular member includes an inner cam surface having a series of peaks and a series of recesses. Each of the negative stiffness elements includes an inner end fixedly coupled to the central shaft and an outer end engaging the inner cam surface. Each of the flexures is configured permit movement of the outer ends of the negative stiffness members in a first direction and prevent movement of the outer ends of the negative stiffness members in a second direction perpendicular to the first direction. Rotation of the outer annular member around the central shaft alternately aligns the series of peaks on the inner cam surface with the outer ends of the negative stiffness elements to compress the negative stiffness elements and aligns the series of recesses on the inner cam surface with the outer ends of the negative stiffness elements to expand the negative stiffness elements. The adjustable negative stiffness mechanism may include an ortho-planar spring coupled to the central shaft. A position of the ortho-planar spring may be adjustable. The adjustable negative stiffness mechanism may include a top plate coupled to the central shaft, a bottom plate spaced apart from the top plate, wherein the bottom plate is configured to slide along the central shaft, at least one coil spring extending between the bottom plate and the top plate, and a second motor operatively coupled to the bottom plate. The second motor is configured to move the bottom plate toward and away from the top plate to compress and elongate the at least one coil spring. The adjustable negative stiffness mechanism may include a thrust bearing and a coil spring container rotatably supported on the thrust bearing. The coil spring container includes internal threads configured to engage external threads on the bottom plate. The second motor is configured to rotate the coil spring container such that the external threads engage the internal threads to move the bottom plate toward and away from the top plate to compress and elongate the at least one coil spring. The adjustable negative stiffness mechanism may include a containment vessel housing the outer annular member, the at least two negative stiffness elements, the flexures, the top plate, the bottom plate, and the at least one coil spring. The first and second motors may be coupled to an outer surface of the containment vessel.

The present disclosure is also directed to various embodiments of an adjustable negative stiffness system. In one embodiment, the negative stiffness system includes a central input gear assembly, a series of adjustable negative stiffness mechanisms arranged around the central input gear assembly, and an outer ring extending around the series of adjustable negative stiffness mechanisms. Each of the adjustable negative stiffness mechanisms engages the central input gear assembly and the outer ring. Each of the adjustable negative stiffness mechanisms includes a central portion configured to receive a central shaft, an outer annular member extending around the central portion, at least two negative stiffness elements extending between the central portion and the annular member, and a plurality of tracks defined in the outer annular member. Each of the at least two negative stiffness elements includes an inner end coupled to the central portion and an outer end engaging the outer annular member. Each of the tracks has a first end spaced apart from the central portion by a first distance and a second end spaced apart from the central portion by a second distance greater than the first distance. The outer end of each of the negative stiffness elements is slidably received in one of the plurality of tracks. The adjustable negative stiffness system may include from two to ten adjustable negative stiffness mechanisms. The adjustable negative stiffness system may include an ortho-planar spring coupled to each of the negative stiffness mechanisms. The adjustable negative stiffness system may include a drive shaft coupled to the central input gear assembly to rotate the central input gear assembly. Rotation of the central input gear assembly synchronously rotates the outer annular members around the central portions and moves the outer ends of the negative stiffness elements between the first and second ends of the tracks in the outer annular member. An outer surface of each the outer annular members of the negative stiffness mechanisms may include a series of teeth configured to engage a series of teeth on an inner surface of the outer ring and a series of teeth on outer surface of the central input gear assembly.

This summary is provided to introduce a selection of concepts that are further described below in the detailed description. This summary is not intended to identify key or essential features of the claimed subject matter, nor is it intended to be used in limiting the scope of the claimed subject matter. One or more of the described features may be combined with one or more other described features to provide a workable device.

### BRIEF DESCRIPTION OF THE DRAWINGS

These and other features and advantages of embodiments of the present disclosure will become more apparent by reference to the following detailed description when considered in conjunction with the following drawings. In the drawings, like reference numerals are used throughout the figures to reference like features and components. The figures are not necessarily drawn to scale
FIG. 1A is a top view of an adjustable negative stiffness unit cell according to one embodiment of the present disclosure;
FIGS. 1B and 1C are cross-sectional views of the embodiment of the adjustable negative stiffness unit cell illustrated in FIG. 1A in a first state and a second state, respectively;
FIG. 2 is a cross-sectional view of an adjustable negative stiffness unit cell according to another embodiment of the present disclosure;
FIGS. 3A and 3B are perspective views of an adjustable negative stiffness unit cell according to one embodiment of the present disclosure in an expanded position and a compressed position, respectively;
FIGS. 4A and 4B are an exploded perspective view and a cutaway perspective view, respectively, of an adjustable negative stiffness mechanism according to an embodiment of the present disclosure incorporating the embodiment of the adjustable negative stiffness unit cell illustrated in FIGS. 3A and 3B;
FIGS. 5A and 5B are a perspective view and an exploded perspective view, respectively, of an adjustable negative stiffness unit cell according to another embodiment of the present disclosure;
FIGS. 5C and 5D are perspective views of the embodiment of the adjustable negative stiffness unit cell illustrated in FIGS. 5A and 5B in an expanded position and a compressed position, respectively; and
FIGS. 6A and 6B are a perspective view and an exploded perspective view, respectively, of an adjustable negative stiffness mechanism according to another embodiment of the present disclosure incorporating a plurality of the adjustable negative stiffness unit cells illustrated in FIGS. 5A-5D.

### DETAILED DESCRIPTION

The present disclosure is directed to various embodiments of an adjustable negative stiffness unit cell configured to vary the mechanical response of the unit cell. The present disclosure is also directed to a system of negative stiffness unit cells in which the mechanical response of each of the negative stiffness unit cells can be adjusted simultaneously and synchronously. The negative stiffness unit cells of the present disclosure may be incorporated into any desired structure or device depending on the intended purpose or function of the negative stiffness structure, such as, for instance, as a tuned-mass damper or as a mechanism for vibration isolation, shock mitigation, or signal processing. For instance, the adjustable negative stiffness unit cells and mechanisms of the present disclosure may be incorporated into a structure as a payload mount (e.g., a mount for sensitive electronics on a helicopter that is configured to isolate the electronics from multiple rotor frequencies) or as a component of a vehicle (e.g., as a motor mount for an automobile configured to isolate vibration between the engine and the chassis).

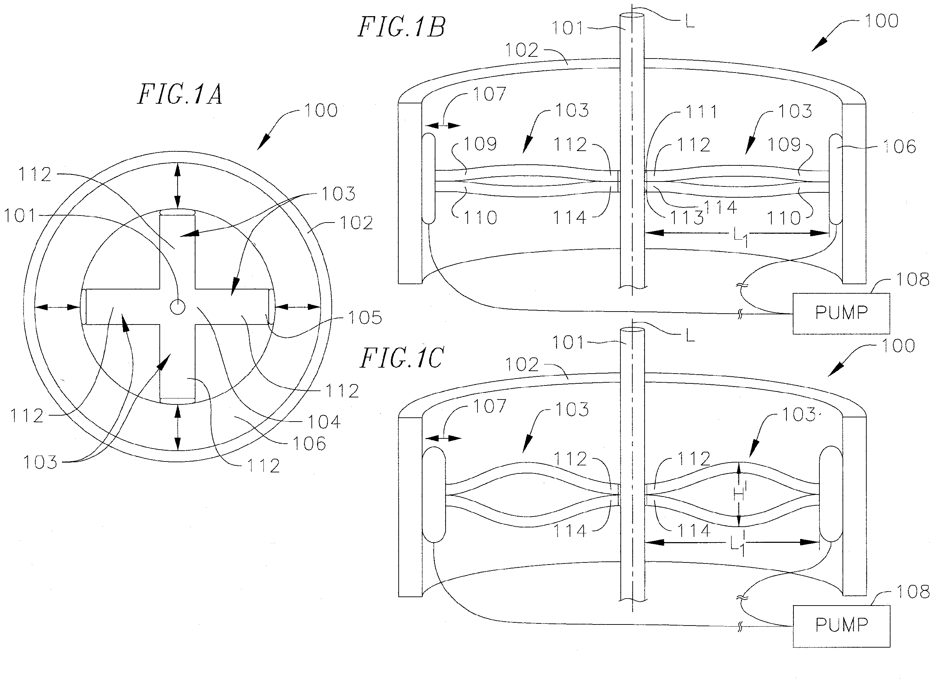

With reference now to FIGS. 1A and 1B, a negative stiffness unit cell **100** according to one embodiment of the present disclosure includes a central shaft **101** defining a longitudinal axis **L**, an annular member **102** (e.g., a ring) extending around the central shaft **101**, a plurality of negative stiffness elements **103** extending radially outward between the central shaft **101** and the annular member **102**. In the illustrated embodiment, each of the plurality of negative stiffness elements **103** includes an inner end **104** fixedly coupled to the central shaft **101** and an outer end **105** proximate the annular member **102**. In the illustrated embodiment, the negative stiffness unit cell **100** includes four negative stiffness elements **103** circumferentially and equidistantly spaced around the central shaft **101**, although in one or more embodiments, the negative stiffness unit cell **100** may include any other suitable number of negative stiffness elements **103**, such as, for instance, from two to ten negative stiffness elements **103**.

Additionally, in the illustrated embodiment, the negative stiffness unit cell **100** includes at least one actuator **106** coupled to the outer end **105** of each of the negative stiffness elements **103**. The actuator **106** is configured to move between a deflated position (see FIG. 1B) and an inflated position (see FIG. 1C) to move the negative stiffness elements **103** between an elongated or relaxed state and a compressed state, respectively. In the illustrated embodiment, the actuator **106** is configured to expand and contract radially inward and radially outward (arrow **107**) to compress and relax, respectively, the negative stiffness elements **103**. The one or more actuators **106** may be any suitable type or kind of mechanism configured to compress and relax the negative stiffness elements **103**, such as for instance, a hydraulic bladder, a pneumatic bladder, or a piston. In the illustrated embodiment, the negative stiffness unit cell **100** also includes a fluid delivery unit **108** (e.g., a pump) coupled to the one or more actuators **106** that is configured to supply and withdraw fluid (e.g., a gas or a liquid) to the one or more actuators **106** and thereby move the one or more actuators **106** between the deflated and inflated states. Although in the illustrated embodiment the negative stiffness unit cell **100** includes a single actuator **106** extending continuously around an inner periphery of the annular member **102**, in one or more embodiments, the negative stiffness unit cell **100** may include any other suitable number of actuators, such as, for instance, a plurality of discrete actuators corresponding in number to the number of negative stiffness elements **103** (e.g., from two to ten actuators).

In the illustrated embodiment, the adjustable negative stiffness unit cell **100** includes an upper plate **109** stacked on a lower plate **110**. Additionally, in the illustrated embodiment, the upper plate **109** includes a flat central portion defining an opening **111** configured to accommodate the central shaft **101** and four arms **112** extending radially outward from the central portion. In the illustrated embodiment, the four arms **112** are equidistantly spaced around the central portion such that adjacent arms **112** are spaced apart by an angle of approximately (about) 90 degrees. In one or more embodiments, the upper plate **109** may include any other suitable number of arms **112**, such as, for instance, from two to ten arms. Similarly, in the illustrated embodiment, the lower plate **110** includes a central portion defining an opening **113** configured to accommodate the central shaft **101** and four arms **114** extending radially outward from the central portion. The arms **114** on the lower plate **110** are aligned with the arms **112** on the upper plate **109**. Together, the corresponding pairs of arms **112**, **114** on the upper and lower plates **109, 110** define the negative stiffness elements **103** (e.g., each of the negative stiffness elements **103** includes one arm **112** on the upper plate **109** and one corresponding arm **114** on the lower plate **110**). In one embodiment, the upper and lower plates **109, 110** may be formed from any material having a relatively high elastic strain limit, such as, for instance, fiberglass, titanium, or combinations thereof. In one or more alternate embodiments, the upper and lower plates **109, 110** may be formed out of any other suitable material, such as, for instance, steel, silicon, or combinations thereof.

In the illustrated embodiment, each of the arms **112, 114** of the upper and lower plates **109, 110** are preformed into a curved or contoured shape (e.g., a bell curve or a cosine shape with a single hump). In one or more embodiment, the arms **112, 114** may have any other suitable shape, such as, for instance, flat plates. In one embodiment, the arms **112, 114** may have any other suitable shape after being compressed. The arms **112, 114** of the upper and lower plates **109, 110** in the illustrated embodiments are also curved or contoured in opposite directions (e.g., the arms **112** of the upper plate **109** are curved upward and the arms **114** of the lower plate **110** are curved downward). Accordingly, in the illustrated embodiment, inner and outer ends of the corresponding arms **112, 114** on the upper and lower plates **109, 110** contact each other and intermediate portions of the corresponding arms **112, 114** on the upper and lower plates **109, 110** between the inner and outer ends are spaced apart by a maximum amplitude **h**, as illustrated in FIG. 1B.

Additionally, in an initial state illustrated in FIG. 1B, the linear distance between the inner ends and the outer ends of the arms **112, 114** has an initial length **L₁**. As illustrated in FIG. 1C, actuating (arrow **107**) the one or more actuators **106** is configured to increase the compressive load on the arms **112, 114** by decreasing the distance **L_{1'}** between the inner ends and the outer ends of the corresponding pairs of arms **112, 114** on the upper and lower plates **109, 110.** Additionally, as illustrated in FIG. 1C, increasing the compressive load on the arms **112, 114** increases the maximum amplitude **h'** between the intermediate portions of the arms **112**, **114**. In this manner, the one or more actuators **106** are configured to change the mechanical response of the negative stiffness unit cell **100**, as described below (i.e., the negative stiffness response of the unit cell **100** may be adjusted by actuating the one or more actuators **106** between the deflated and inflated states).

In the illustrated embodiment, the arms **112, 114** of the upper and lower plates **109**, **110** are snap-through beams. Accordingly, each of the negative stiffness elements **103** is configured to "snap" between a first stable position and a second stable position. Within an envelope defined or bounded by these two stable positions, the adjustable negative stiffness unit cell **100** exhibits negative stiffness (i.e., negative stiffness is generated during snap through between the two stable positions). Outside of this envelope bounded by the two stable positions of the negative stiffness elements **103**, the adjustable negative stiffness unit cell **100** exhibits positive stiffness. Accordingly, the adjustable negative stiffness unit cell **100** exhibits non-linear stiffness (i.e., the adjustable negative stiffness unit cell **100** exhibits both positive and negative stiffness). For instance, when an upward force is applied to the annular member **102**, the adjustable negative stiffness unit cell **100** is configured to initially exhibit a positive stiffness resisting the upward deflection. However, as the force and the magnitude of the upward deflection increase, the adjustable negative stiffness unit cell **100** will reach a snap-through point at which adjustable negative stiffness unit cell **100** will "snap-through" to a stable higher position. During snap through, the adjustable negative stiffness unit cell **100** exhibits negative stiffness (i.e., the adjustable negative stiffness unit cell **100** exhibits an upward force in the direction in which the load was applied to the annular member **102**). Similarly, when a downward force is applied to the annular member **102**, the adjustable negative stiffness unit cell **100** is initially configured to exhibit a positive stiffness resisting the downward deflection. However, as the force and the magnitude of the downward deflection increase, the adjustable negative stiffness unit cell **100** will reach a snap-through point at which the adjustable negative stiffness unit cell **100** will snap-through to a stable lower position. During snap through, the adjustable negative stiffness unit cell **100** exhibits negative stiffness (i.e., the adjustable negative stiffness unit cell **100** exhibits a downward force in the direction in which the load was applied to the annular member **102**). In this manner, the negative stiffness elements **103** are configured to mechanically isolate the central shaft **101** from vibrations in the annular member **102** and/or to mechanically isolate the annular member **102** from vibrations in the central shaft **101**. Although in the illustrated embodiment each of the negative stiffness elements **103** includes a pair of compressive snap-through beams, in one or more embodiments, the negative stiffness elements **103** may be any other suitable mechanism exhibiting a negative stiffness mechanical response.

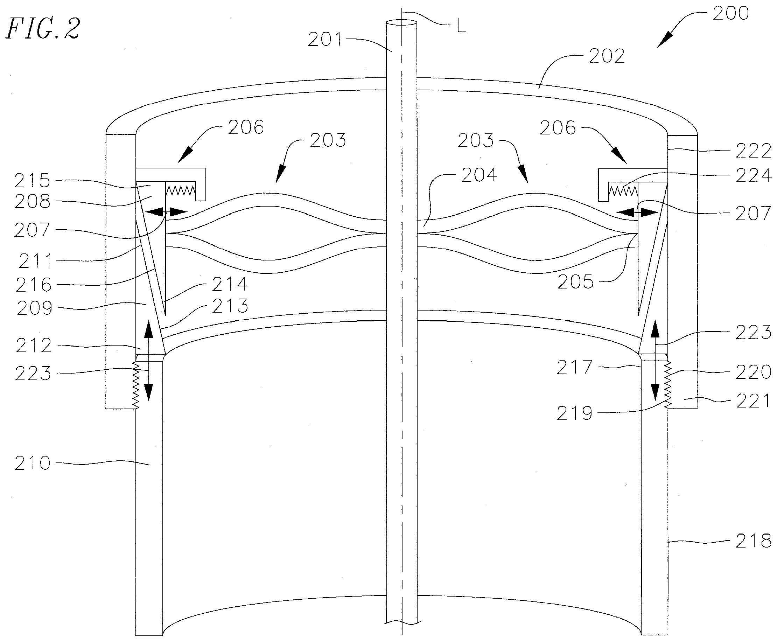

With reference now to FIG. 2, an adjustable negative stiffness unit cell **200** according to another embodiment of the present disclosure includes a central shaft **201** defining a longitudinal axis **L**, an annular member **202** (e.g., a ring) extending around the central shaft **201**, a plurality of negative stiffness elements **203** extending radially outward between the central shaft **201** and the annular member **202**. The central shaft **201**, the annular member **202**, and the negative stiffness elements **203** may be the same or similar to the central shaft **101**, the annular member **102**, and the negative stiffness elements **103** described above with reference to the embodiment of the adjustable negative stiffness unit cell **100** illustrated in FIGS. 1A-1C. In the illustrated embodiment, each of the plurality of negative stiffness elements **203** includes an inner end **204** fixedly coupled to the central shaft **201** and an outer end **205** proximate the annular member **202**. In the illustrated embodiment, the adjustable negative stiffness unit cell **200** includes four negative stiffness elements **203** (two of which are visible in FIG. 2) circumferentially and equidistantly spaced around the central shaft **201**, although in one or more embodiments, the adjustable negative stiffness unit cell **200** may include any other suitable number of negative stiffness elements **203**, such as, for instance, from two to ten negative stiffness elements. Additionally, in the illustrated embodiment, the negative stiffness unit cell **200** includes at least one actuator assembly **206** coupled to the outer end **205** of each of the negative stiffness elements **203**. The actuator assembly **206** is configured to move (arrow **207**) between a disengaged position and an engaged position to move the negative stiffness elements **203** between an elongated state (e.g., a relaxed stated) and a compressed state, respectively.

In the embodiment illustrated in FIG. 2, the actuator assembly **206** includes an upper wedge-shaped member **208**, a lower wedge-shaped member **209** configured to slidably engage the upper wedge-shaped member **208**, and a secondary annular member **210** coupled to the lower wedge-shaped member **209**. The lower wedge-shaped member **209** tapers between a narrower upper end **211** and a wider lower end **212**, and includes an inwardly facing tapered engagement surface **213**. The upper wedge-shaped member **208** tapers between a narrower lower end **214** and a wider upper end **215**, and includes an outwardly facing tapered engagement surface **216**. The inwardly facing tapered engagement surface **213** on the lower wedge-shaped member **209** is configured to engage a corresponding outwardly facing tapered engagement surface **216** on the upper wedge-shaped member **208**.

Additionally, in the embodiment illustrated in FIG. 2, the secondary annular member **210** is at least partially housed between the outer annular member **202** and the central shaft **201**. In the illustrated embodiment, an upper end **217** of an outer surface **218** of the secondary annular member **210** includes external threads **219** configured to engage internal threads **220** on a lower end **221** of an inner surface **222** of the outer annular member **202**. As the secondary annular member **210** is threaded upward (arrow **223**) into the outer annular member **202**, the lower wedge-shaped member **209** is forced upward. As the lower wedge-shaped member **209** is forced upward by the secondary annular member **210**, the inwardly facing tapered engagement surface **213** on the lower wedge-shaped member **209** engages the outwardly facing tapered engagement surface **216** on the upper wedge-shaped member **208** and forces the upper wedge-shaped member **208** radially inward (arrow **207**). The radially inward movement (arrow **207**) of the upper wedge-shaped member **208** compresses the negative stiffness elements **203** to adjust the mechanical response of the adjustable negative stiffness unit cell **200**.

As the secondary annular member **210** is unthreaded from the outer annular member **202**, the force imparted on the outwardly facing tapered engagement surface **216** on the upper wedge-shaped member **208** by the inwardly facing tapered engagement surface **213** on the lower wedge-shaped member **209** is lessened (e.g., the inwardly facing tapered engagement surface **213** on the lower wedge-shaped member **209** disengages the outwardly facing tapered engagement surface **216** on the upper wedge-shaped member **208**) and the upper wedge-shaped member **208** is permitted to move radially outward (arrow **207**). Additionally, in the illustrated embodiment, the actuator assembly **206** includes a biasing mechanism **224** (e.g., a spring) configured to move the upper wedge-shaped member radially outward (arrow **207**) as the secondary annular member **210** is unthreaded from the outer annular member **202**. As the upper wedge-shaped member moves radially outward (arrow **207**), the negative stiffness elements **203** elongate to adjust the mechanical response of the adjustable negative stiffness unit cell **200.** The secondary annular member **210** may be adjusted (e.g., threaded and unthreaded) either manually or automatically (e.g., by a motor). Additionally, although in the illustrated embodiment the secondary annular member **210** is threadedly coupled to the outer annular member **202**, in one or more embodiments, the secondary annular member **210** may be coupled to the outer annular member **202** by any other suitable mechanism, such as, for instance, with one or more guides or rails.

Although in the illustrated embodiment the negative stiffness unit cell **200** includes a single upper wedge-shaped member **208** extending continuously or substantially continuously around an inner periphery of the outer annular member **202** and a single lower wedge-shaped member **209** extending continuously or substantially continuously around the inner periphery of the outer annular member **202** (i.e., a single pair of upper and lower wedge-shaped members **208**, **209**), in one or more embodiments, the negative stiffness unit cell **200** may include any other suitable number of pairs of upper and lower wedge-shaped members **208**, **209**, such as, for instance, a plurality of discrete upper and lower wedge-shaped members corresponding in number to the number of negative stiffness elements **203** (e.g., from two to ten pairs of upper and lower wedge-shaped members).

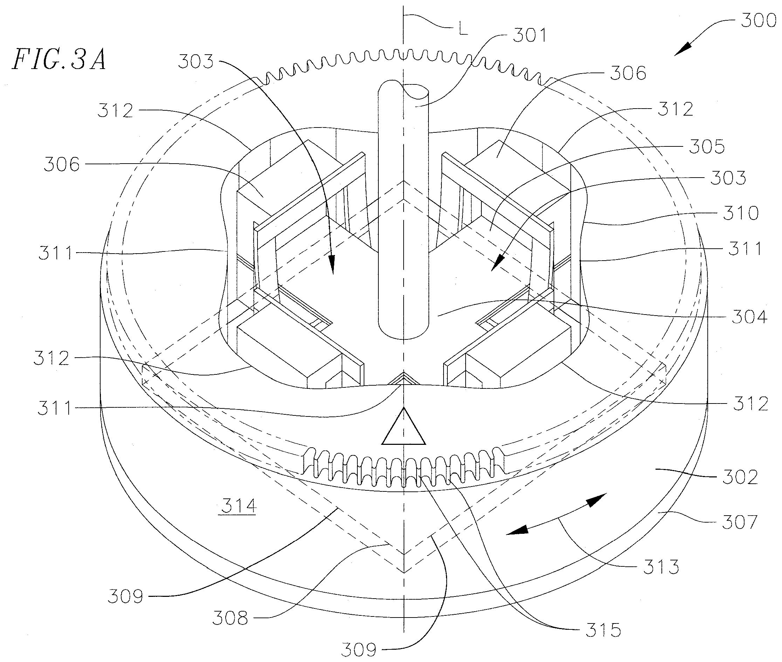

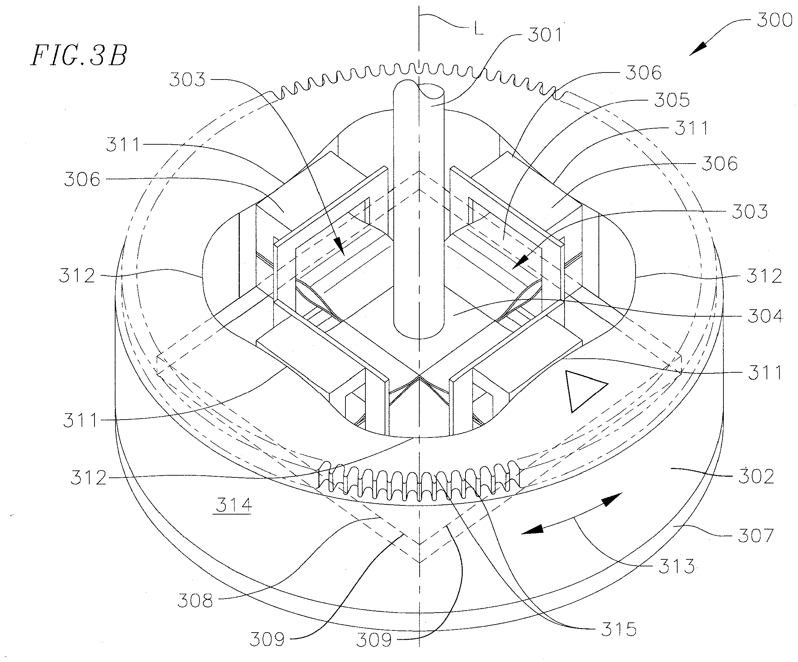

With reference now to FIGS. 3A and 3B, an adjustable negative stiffness unit cell **300** according to another embodiment includes a central shaft **301** defining a longitudinal axis **L**, an annular member **302** extending around the central shaft **301**, a plurality of negative stiffness elements **303** extending radially outward between the central shaft **301** and the annular member **302**. The central shaft **301** and the negative stiffness elements **303** may be the same or similar to the central shaft **101** and the negative stiffness elements **103** described above with reference to the embodiment of the adjustable negative stiffness unit cell **100** illustrated in FIGS. 1A-1C. In the illustrated embodiment, each of the plurality of negative stiffness elements **303** includes an inner end **304** fixedly coupled to the central shaft **301** and an outer end **305** proximate the annular member **302**. In the illustrated embodiment, the adjustable negative stiffness unit cell **300** includes four negative stiffness elements **303** circumferentially and equidistantly spaced around the central shaft **301**, although in one or more embodiments, the adjustable negative stiffness unit cell **300** may include any other suitable number of negative stiffness elements **303**, such as, for instance, from two to ten negative stiffness elements.

Additionally, in the illustrated embodiments, the adjustable negative stiffness unit cell **300** includes a flexure **306** coupled to the outer end **305** of each of the negative stiffness elements **303**. The flexures **306** permit movement of the outer ends **305** of the negative stiffness elements **303** in a first direction, but prevent movement of the outer ends **305** of the negative stiffness elements **303** in a second direction perpendicular to the first direction. In the illustrated embodiment, the flexures **306** are configured to permit movement of the outer ends **305** of the negative stiffness elements **303** in a plane perpendicular to the longitudinal axis **L** of the central shaft **301** and are configured to prevent movement of the outer ends **305** of the negative stiffness elements **303** in a plane parallel to the longitudinal axis **L** of the central shaft **301**. For instance, in one embodiment, the flexures **306** are configured to permit horizontal movement of the outer ends **305** of the negative stiffness elements **303**, but prevent vertical movement of the outer ends **305** of the negative stiffness elements **303**.

In the illustrated embodiment, the adjustable negative stiffness unit cell **300** also includes a base plate **307**. In the illustrated embodiment, the outer annular member **302** is supported on the base plate **307**. The base plate **307** defines an opening **308** configured to accommodate the flexures **306**. In the illustrated embodiment, the flexures **306** are coupled to interior edges **309** of the base plate **307** defining the opening **308**. Although in the illustrated embodiment the opening **308** is square such that the base plate **307** includes four interior edges **309**, in one or more embodiments, the opening **308** may have any other suitable shape (e.g., hexagonal, octagonal, or decagonal), depending, for instance, on the number of flexures **306** and the number of negative stiffness elements **303**. Additionally, in one or more embodiments, the number of interior edges **309** defining the opening **308** in the base plate **307** corresponds to the number of flexures **306** and the number of negative stiffness elements **303**.

Additionally, in the illustrated embodiment, the outer annular member **302** includes an inner cam surface **310**. In the illustrated embodiment, the inner cam surface **310** on the outer annular member **302** includes a series of peaks **311** and a series of recesses or wells **312** alternately arranged (e.g., the inner cam surface **310** includes a recess **312** between adjacent peaks **311**). The number of peaks **311** and the number of recesses **312** on the inner cam surface **310** correspond to the number of flexures **306** and the number of negative stiffness elements **303**. As illustrated in FIG. 3A, when the recesses **312** are aligned with the flexures **306** and the outer ends **305** of the negative stiffness elements **303**, the negative stiffness elements **303** are in an elongated state (e.g. an uncompressed state). As the outer annular member **302** rotates (arrow **313**), the recesses **312** are moved out of alignment with the flexures **306** and the outer ends **305** of the negative stiffness elements **303**, and the peaks **311** are advanced toward the flexures **306** and the outer ends **305** of the negative stiffness elements **303**. As illustrated in FIG. 3B, when the peaks **311** are aligned with the flexures **306** and the outer ends **305** of the negative stiffness elements **303**, the negative stiffness elements **303** are in a compressed (e.g., buckled) state. In this manner, the outer annular member **302** may be rotated (arrow **313**) to adjust the mechanical response of the adjustable negative stiffness unit cell **300** (e.g., the outer annular member **302** is configured to function as an actuator configured to compress and elongate (e.g., relax) the negative stiffness elements **303** to adjust the mechanical response of the adjustable negative stiffness unit cell **300**). Although in the illustrated embodiment the recesses **312** are symmetric, in one or more embodiments, the recesses **312** may not be symmetric (i.e., the recesses **312** may be asymmetric). For example, in one or more embodiments, to improve performance, the recesses **312** may include notches and/or detents or other features (e.g., depressions or protrusions) to make certain angular positions more stable. Additionally, in one or more embodiments, if rotation (arrow **313**) proceeds in one direction only (e.g., clockwise or counterclockwise only), the recesses **312** may have a shallow slope during compression and steep slope during relaxation of the negative stiffness elements **303**, in order to increase the release speed and increase the mechanical advantage of the outer annular member **302** over the negative stiffness elements **303**.

Additionally, in the illustrated embodiment, an outer surface **314** of the outer annular member **302** includes a plurality of teeth **315** (e.g., the outer surface **314** of the outer annular member **302** is geared). The teeth **315** are configured to facilitate rotating (arrow **313**) the outer annular member **302** (e.g., with a belt or a chain driven by a motor). In one or more embodiments, the outer annular member **302** may include any other suitable mechanism configured to facilitate rotation (arrow **313**) of the outer annular member **302**. Additionally, the outer annular member **302** may be rotated either manually or automatically (e.g., with a motor).

With reference now to FIGS. 4A and 4B, an adjustable negative stiffness mechanism **400** according to one embodiment of the present disclosure incorporates the embodiment of the adjustable negative stiffness unit cell **300** illustrated in FIGS. 3A and 3B. In the embodiment illustrated in FIGS. 4A and 4B, the adjustable negative stiffness mechanism **400** includes a containment vessel **401**, a positive-stiffness spring assembly **402**, upper and lower ortho-planar springs **403**, **404**, respectively, and a pair of rotary motors **405**, **406**. The containment vessel **401** is configured to house the adjustable negative stiffness unit cell **300**, the positive-stiffness spring assembly **402**, and the upper and lower ortho-planar springs **403**, **404**. In the illustrated embodiment, the base plate **307** of the adjustable negative stiffness unit cell **300** is fixedly coupled to the containment vessel **401** and the outer annular member **302** of the adjustable negative stiffness unit cell **300** is rotatable (arrow **313**) within the containment vessel **401**. Additionally, in the illustrated embodiment, the rotary motors **405**, **406** are configured to be mounted to an exterior surface **407** of the containment vessel **401** by a pair of support arms **408**, **409**.

Still referring to the embodiment illustrated in FIGS. 4A and 4B, the positive-stiffness spring assembly **402** includes a top plate **410** fixedly coupled to the central shaft **301**, a bottom plate **411** slidably coupled to the central shaft **301**, and a series of coil springs **412** extending between the bottom plate **411** and the top plate **410.** In one or more embodiments, the positive-stiffness spring assembly **402** may include any other suitable number of coil springs **412**, such as, for instance, a single coil spring.

Additionally, in the illustrated embodiment, the positive-stiffness spring assembly **402** also includes a spring container **413** that is configured to house the top and bottom plates **410**, **411** and the coil springs **412**. The spring container **413** includes a base wall **414** below the bottom plate **411** and a sidewall **415** extending up from the base wall **414**. When the adjustable negative stiffness mechanism **400** is assembled, as illustrated in FIG. 4B, the spring container **413** is rotatably supported on thrust bearings **416**. Additionally, in the illustrated embodiment, the sidewall **415** of the spring container **413** contains internal threads **417**. The internal threads **417** on the sidewall **415** of the spring container **413** are configured to engage external threads **418** on an outer surface of the bottom plate **411**. The engagement between the internal threads **417** on the sidewall **415** of the spring container **413** and the external threads **418** on the bottom plate **411** is configured to facilitate moving (arrow **419**) the bottom plate **411** up and down along the central shaft **301**. For instance, in one embodiment, when the spring container **413** is rotated (arrow **420**) in a first direction, the threaded engagement between the sidewall **415** of the spring container **413** and the bottom plate **411** causes the bottom plate **411** to move (arrow **419**) up along the central shaft **301** toward the top plate **410**. As the bottom plate **411** moves (arrow **419**) up toward the top plate **410**, the coil springs **412** are compressed between the top plate **410** and the bottom plate **411**, which increases the average force output of the adjustable negative stiffness mechanism **400**. When the spring container **413** is rotated (arrow **421**) in a second direction opposite the first direction (arrow 420), the threaded engagement between the sidewall **415** of the spring container **413** and the bottom plate **411** causes the bottom plate **411** to move (arrow **422**) down along the central shaft **301** away from the top plate **410**. As the bottom plate **411** moves (arrow **422**) down away from the top plate **410**, the coil springs **412** are expanded or elongated, which decreases the average force output of the adjustable negative stiffness mechanism **400**. In this manner, the average force of the adjustable negative stiffness mechanism **400** may be adjusted by rotating the spring container **413** in the suitable direction (arrow **420** or arrow **421**) for the purpose of, for example, supporting an object with a different mass.

Additionally, in the illustrated embodiment, the positive-stiffness spring assembly **402** also includes a grounding plate **423** below the base wall **414** of the spring container **413**. The grounding plate **423** is fixedly coupled to the containment vessel **401**. The grounding plate **423** supports the thrust bearings **416**.

Still referring to the embodiment illustrated in FIGS. 4A and 4B, one of the rotary motors **406** is coupled to the spring container **413** by a belt or chain **424**. In one or more embodiments, an exterior surface of the spring container **413** may include teeth (e.g., the exterior surface of the spring container **413** may be geared) to facilitate engagement of the spring container **413** by the belt or chain **424**. Accordingly, the rotary motor **406** is configured to drive the belt or chain **406** to rotate (arrows **420**, **421**) the spring container **413** in the desired direction to achieve the desired positive stiffness of the adjustable negative stiffness mechanism **400**. Additionally, in the illustrated embodiment, the containment vessel **401** defines a pair of openings **425** (one opening visible in FIG. 4A) configured to receive the belt or chain **424** coupled to the rotary motor **406.** In the illustrated embodiment, the belt or chain **424** extends from the rotary motor **406** coupled to the exterior surface **407** of the containment vessel **401**, in through one of the openings **425** in the containment vessel **401**, around the spring container **413**, and out through the other opening in the containment vessel **401** back to the rotary motor **406**. In one or more alternate embodiments, the spring container **413** may be configured to be rotated manually. In loading configurations where negative reaction forces are required (e.g., surviving a "flipped" orientation which reverses gravity), it may be desirable to prevent the compression springs **412** from "lifting off" and losing contact with the plates **410**, **411.** Accordingly, in one or more embodiments, ends of the springs **412** may be bonded or otherwise retained to the plates **410**, **411**, the compression springs **412** (e.g., coil springs) may be replaced with ortho-planar springs, or the interface between the springs 412 and the plates **410**, **411** may be modified to include a pair of antagonistic compression springs which always maintain contact with the plates **410**, **411**.

With continued reference to the embodiment illustrated in FIGS. 4A and 4B, the other rotary motor **405** coupled to the exterior surface **407** of the containment vessel **401** is coupled to a chain or belt **426** configured to engage the teeth **315** on the outer surface **314** of the outer annular member **302**. In the illustrated embodiment, the containment vessel **401** defines a pair of openings **427** (one visible in FIG. 4A) configured to receive the belt or chain **426** coupled to the rotary motor **405**. In the illustrated embodiment, the belt or chain **426** extends from the rotary motor **405** coupled to the exterior surface **407** of the containment vessel **401**, in through one of the openings **427** in the containment vessel **401**, around the outer annular member **302** of the adjustable negative stiffness unit cell **300**, and out through the other opening in the containment vessel **401** back to the rotary motor **405.** Accordingly, the rotary motor **405** is configured to drive the belt or chain **427** to rotate (arrow **313**) the outer annular member **302** such that the recesses **312** or the peaks **311** on the inner cam surface **310** of the outer annular member **302** are aligned with the negative stiffness elements **303**. As described above with reference to the embodiment of the adjustable negative stiffness unit cell **300** illustrated in FIG. 3A, when the recesses **312** are aligned with the outer ends **305** of the negative stiffness elements **303**, the negative stiffness elements **303** are in an elongated state (e.g. an uncompressed state). As described above with reference to the embodiment of the adjustable negative stiffness unit cell **300** illustrated in FIG. 3B, when the peaks **311** are aligned with the negative stiffness elements **303**, the negative stiffness elements **303** are in a compressed (e.g., buckled) state. In this manner, the negative stiffness of the adjustable negative stiffness mechanism **400** may be adjusted by rotating (arrow **313**) the outer annular member **302**. In one or more alternate embodiments, the outer annular member **302** may be configured to be rotated manually.

Additionally, in the embodiment illustrated in FIGS. 4A and 4B, the upper and lower ortho-planar springs **403**, **404**, respectively, extend between the central shaft **301** and the containment vessel **401**. Additionally, in the illustrated embodiment, the ortho-planar springs **403, 404** are fixedly coupled to the central shaft **301**. Accordingly, the upper and lower ortho-planar springs **403, 404** are configured to reduce motion of the central shaft **301** in a direction other than along the longitudinal axis **L** of the central shaft **301.** In one or more embodiments, the ortho-planar springs **403, 404** may be configured to supply positive stiffness to the adjustable negative stiffness mechanism **400** in a direction of the longitudinal axis **L** of the central shaft **301**. Additionally, in one or more embodiments, the position of the ortho-planar springs **403, 404** relative to the containment vessel **401** may be adjustable to adjust the magnitude of the positive stiffness supplied by the ortho-planar springs **403**, **404.** In one or more embodiments in which the ortho-planar springs **403, 404** are configured to provide positive stiffness to the adjustable negative stiffness mechanism **400** in a direction of the longitudinal axis **L** of the central shaft **301**, the adjustable negative stiffness mechanism **400** may be provided without the positive-stiffness spring assembly **402**.

Accordingly, in the embodiment of the adjustable negative stiffness mechanism **400** illustrated in FIGS. 4A and 4B, the central shaft **301** is mechanically isolated from vibrations in the containment vessel **401** and the containment vessel **401** is mechanically isolated from vibrations in the central shaft **301** due to the negative stiffness elements **303** in the adjustable negative stiffness unit cell **300**, the upper and lower ortho-planar springs **403**, **404**, and the positive stiffness coil springs **412** of the positive-stiffness spring assembly **402.**

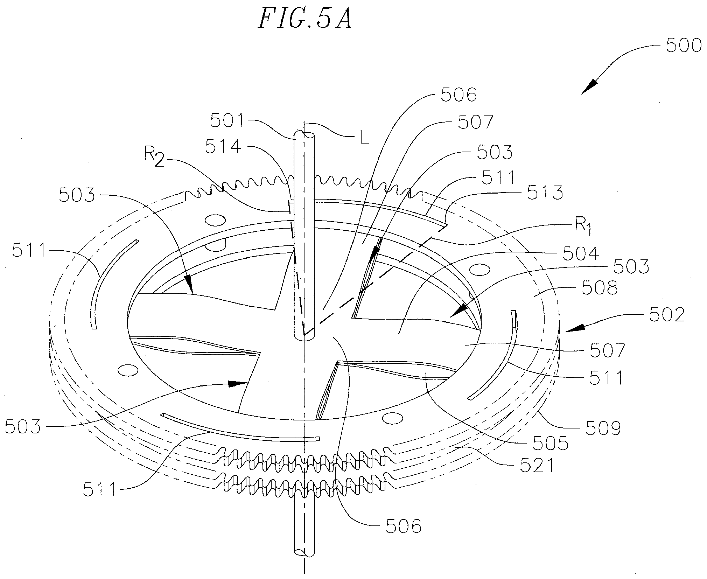

With reference now to FIGS. 5A-5D, an adjustable negative stiffness unit cell **500** according to another embodiment of the present disclosure includes a central shaft **501** defining a longitudinal axis **L**, an annular member **502** extending around the central shaft **501,** a plurality of negative stiffness elements **503** extending radially outward between the central shaft **501** and the annular member **502**. The central shaft **501** and the negative stiffness elements **503** may be the same or similar to the central shaft **101** and the negative stiffness elements **103** described above with reference to the embodiment of the adjustable negative stiffness unit cell **100** illustrated in FIGS. 1A-1C. In the illustrated embodiment, each of the negative stiffness elements **103** includes a pair of upper and lower legs **504**, **505**. In the illustrated embodiment, each of the negative stiffness elements **503** includes an inner end **506** fixedly coupled to the central shaft **501** and an outer end **507** slidably coupled to the annular member **502**. In the illustrated embodiment, the adjustable negative stiffness unit cell **500** includes four negative stiffness elements **503** circumferentially and equidistantly spaced around the central shaft **501**, although in one or more embodiments, the adjustable negative stiffness unit cell **500** may include any other suitable number of negative stiffness elements **503**, such as, for instance, from two to ten negative stiffness elements.

In the embodiment illustrated in FIGS. 5A-5B, the annular member **502** includes an upper gear plate **508** aligned with a lower gear plate **509** aligned with the upper gear plate **508**. In the illustrated embodiment, the outer ends **507** of the negative stiffness elements **503** are disposed between the upper and lower gear plates **508**, **509**. Additionally, in the illustrated embodiment, the adjustable negative stiffness unit cell **500** includes a clamp **510** coupled to the outer end **507** of each of the negative stiffness elements **503.** In the illustrated embodiment, each of the clamps **510** is configured to couple an outer end of each upper leg **504** to an outer end of the corresponding lower leg **505.**

Additionally, in the embodiment illustrated in FIGS. 5A-5D, the upper and lower gear plates **508, 509** define a series of grooves or tracks **511**, **512**, respectively. The tracks **511** in the upper gear plate **508** are aligned with the tracks **512** in the lower gear plate **509**. The number of tracks **511, 512** in each of the upper and lower gear plates **508, 509** corresponds to the number of negative stiffness elements **503.** In the illustrated embodiment, each of the tracks **511, 512** has a first end **513** spaced apart from the longitudinal axis **L** by a first radial distance **R₁** and a second end **514** spaced apart from the longitudinal axis **L** by a second radial distance **R₂** less than the first radial distance **R₁**. In the illustrated embodiment, each of the tracks **511, 512** has a continually decreasing radius between the first and second ends **513**, **514**. Accordingly, in the illustrated embodiment, each of the tracks **511, 512** is a spiral segment.

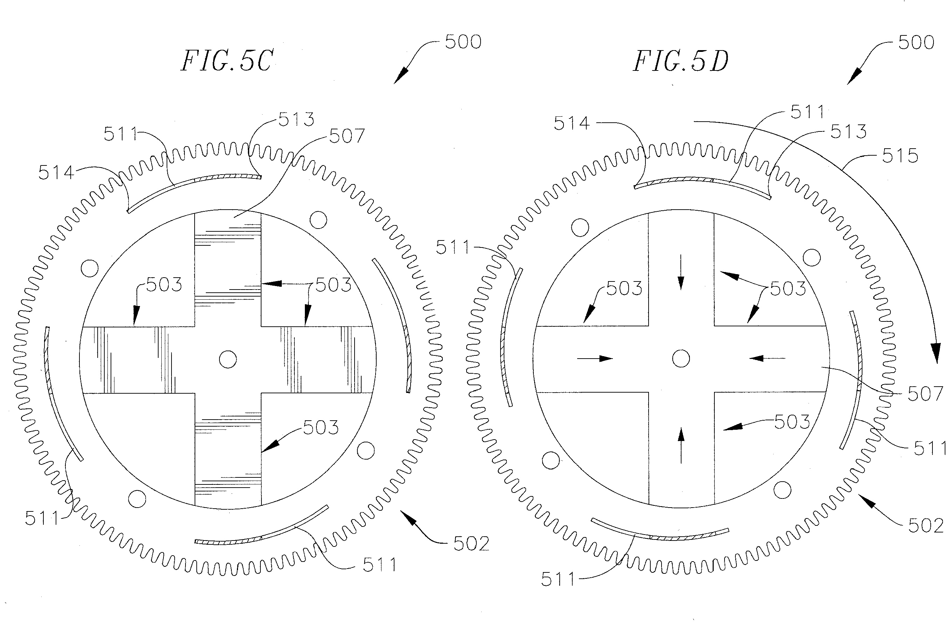

Additionally, in the illustrated embodiment, a portion of each of the clamps **510** is slidably received in one of the pairs of tracks **511**, **512**. As illustrated in FIG. 5C, when the clamps **510** are positioned at the first ends **513** of the tracks **511**, **512**, the negative stiffness elements **503** are in an elongated or a relaxed state (e.g., an uncompressed state). In one embodiment, when the negative stiffness elements **503** are in the relaxed state, the negative stiffness elements exhibit beam bending behavior. As the outer annular member **502** (e.g., the upper and lower gear plates **508**, **509**) is rotated (arrow **515**), the clamps **510** and the outer ends **507** of the negative stiffness elements **503** slide along the pairs of tracks **511**, **512** and are advanced toward the second ends **514** of the tracks **511**, **512**. As illustrated in FIG. 5D, when the clamps **510** and the outer ends **507** of the negative stiffness elements **503** are positioned at the second ends **514** of the tracks **511**, **512**, the negative stiffness elements **503** are in a compressed (e.g., buckled) state due to the shorter radial distance **R₂** between the second ends **514** of the tracks **511**, **512** and the longitudinal axis **L** of the central shaft **501** than the radial distance **R₁** between the first ends **513** of the tracks **511**, **512** and the longitudinal axis **L** of the central shaft **301**. Additionally, the rotation (arrow **515**) of the outer annular member **502** is configured to synchronously and uniformly compress and relax each of the negative stiffness elements **503.** When the negative stiffness elements **503** are in the compressed (e.g., buckled) state (see FIG. 5D), the negative stiffness elements **503** exhibit buckled beam behavior, which exhibits negative stiffness. In this manner, the outer annular member **502** (e.g., the upper and lower gear plates **508**, **509**) may be rotated (arrow **515**) to adjust the mechanical response of the adjustable negative stiffness unit cell **500.**

Additionally, in the illustrated embodiment, outer surfaces of the upper and lower gear plates **508**, **509** include a series of teeth **516**, **517**, respectively, (e.g., the outer surfaces of the upper and lower gear plates **508**, **509** are geared). The teeth **516**, **517** are configured to facilitate rotating the upper and lower gear plates **508**, **509**, such as, for instance, by a belt or a chain driven by a motor and engaging the teeth **516**, **517**. In one or more embodiments, the outer annular member **502** (e.g., the upper and lower gear plates **508**, **509**) may include any other suitable mechanism configured to facilitate rotating (arrow **515**) the upper and lower gear plates **508**, **509** relative to the negative stiffness elements **503.** Additionally, the outer annular member **502** may be rotated either manually or automatically (e.g., with a motor).

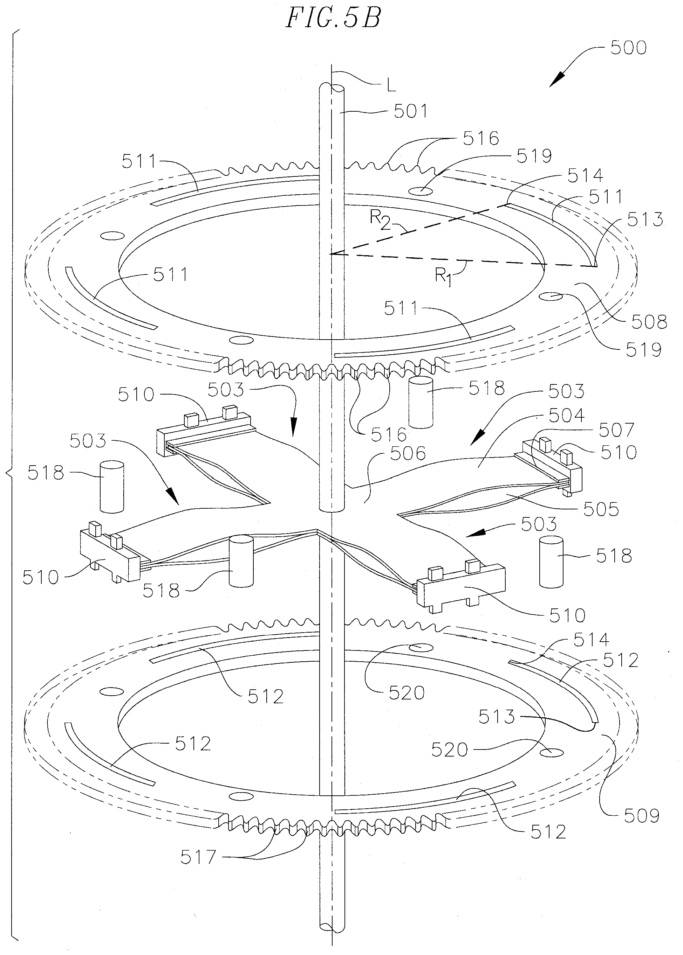

Additionally, as illustrated in FIG. 5B, the adjustable negative stiffness unit cell **500** also includes a series of spacers **518** configured to space the upper gear plate **508** apart from the lower gear plate **509**. Upper ends of the spacers **518** are received in openings **519** in the upper gear plate **508** and lower ends of the spacers **518** are received in corresponding openings **520** in the lower gear plate **509**. The spacers **518** are configured to maintain a gap **521** (see FIG. 5A) between the upper and lower gear plates **508**, **509** to enable the clamps **510** and the outer ends **507** of the negative stiffness elements **503** to slide within the tracks **511**, **512.** Otherwise, friction caused by clamping the outer ends **507** of the negative stiffness elements **503** between the upper and lower gear plates **508, 509** may prevent or inhibit the upper and lower gear plates **508, 509** from rotating (arrow **515**) relative to the negative stiffness elements **503**.

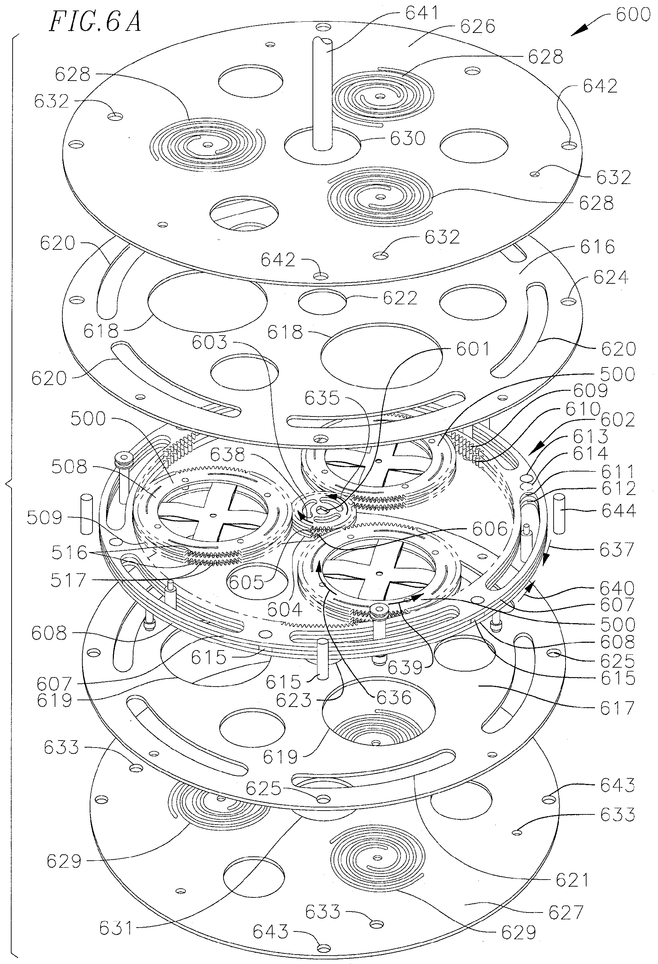

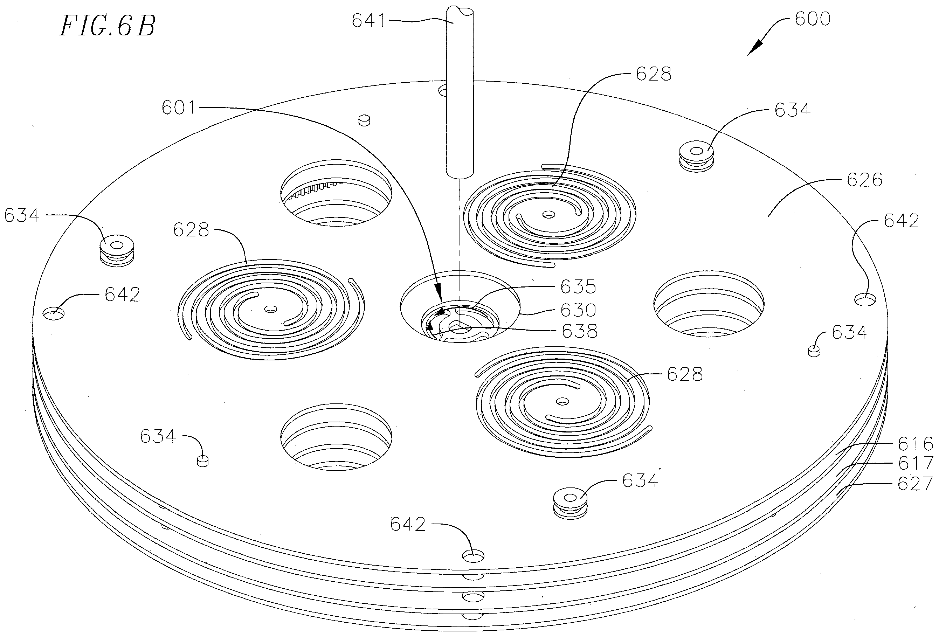

With reference now to FIGS. 6A and 6B, an adjustable negative stiffness mechanism **600** according to another embodiment of the present disclosure includes two or more of the adjustable negative stiffness unit cells **500** illustrated in FIGS. 5A-5D. In the embodiment illustrated in FIGS. 6A and 6B, the adjustable negative stiffness mechanism **600** includes a central input gear assembly **601**, three adjustable negative stiffness unit cells **500** arranged around the central input gear assembly **601**, and an outer annular assembly **602** extending around the three adjustable negative stiffness unit cells **500**. Although in the illustrated embodiment the adjustable negative stiffness mechanism **600** includes three adjustable negative stiffness unit cells **500**, in one or more embodiments, the adjustable negative stiffness mechanism **600** may include any other suitable number of adjustable negative stiffness unit cells **500,** such as, for instance, from two to eight adjustable negative stiffness unit cells. The multiple adjustable negative stiffness unit cells **500** of the adjustable negative stiffness mechanism **600** provide multiple mounting locations for a payload (e.g., a payload may be coupled to any of the three the adjustable negative stiffness unit cells **500**) or two or more payloads may be coupled to two or more of the adjustable negative stiffness unit cells **500**.

In the illustrated embodiment, the central input gear assembly **601** includes an upper central gear plate **603** and a lower central gear plate **604** aligned with the upper central gear plate **603**. Additionally, in the illustrated embodiment, outer surfaces of the upper and lower central gear plates **603, 604** include a series of teeth **605**, **606**, respectively (e.g., the outer surfaces of the upper and lower central gear plates **603, 604** are geared). The teeth **605**, **606** on the upper and lower central gear plates **603, 604** are configured to engage (e.g., mesh) with the teeth **516**, **517** on the upper and lower gear plates **508**, **509**, respectively, on each of the adjustable negative stiffness unit cells **500.**

Additionally, in the illustrated embodiment, the outer annular assembly **602** includes an upper outer annular member **607** and a lower outer annular member **608** aligned with the upper outer annular member **607.** The upper and lower outer annular members **607**, **608** extend around the adjustable negative stiffness unit cells **500.** In the illustrated embodiment, inner surfaces of the upper and lower outer annular members **607, 608** include a series of teeth **609**, **610**, respectively (e.g., the inner surfaces of the upper and lower outer annular members **607, 608** are geared). The teeth **609**, **610** on the upper and lower outer annular members **607, 608** are configured to engage (e.g., mesh) with the teeth **516, 517** on the upper and lower gear plates **508**, **509**, respectively, on each of the adjustable negative stiffness unit cells **500**.

In the illustrated embodiment, the upper and lower outer annular members **607, 608** each also define a series of arcuate notches **611**, **612**, respectively, the significance of which is described below. The upper and lower outer annular members **607, 608** each also include a series of openings **613**, **614**, respectively, (e.g., holes) arranged between the arcuate notches **611**, **612**. In the illustrated embodiment, the adjustable negative stiffness mechanism **600** also includes a series of spacers **615** received in the openings **613**, **614**. The spacers **615** are configured to space the upper outer annular member **607** apart from the lower outer annular member **608** and to align the upper outer annular member **607** with the upper gear plates **508** of the adjustable negative stiffness unit cells **500** and to align the lower outer annular member **608** with the lower gear plates **509** of the adjustable negative stiffness unit cells **500.**

In the illustrated embodiment, the adjustable negative stiffness mechanism **600** also includes an upper cover plate **616** and a lower cover plate **617**. The adjustable negative stiffness unit cells **500**, the central input gear assembly **601**, and the outer annular assembly **602** are disposed between the upper and lower cover plates **616**, **617**. In the illustrated embodiment, the upper and lower cover plates **616**, **617** each define a plurality of openings **618**, **619**, respectively (e.g., holes) that are aligned (e.g., concentric) with the adjustable negative stiffness unit cells **500**. The upper and lower cover plates **616, 617** each also include a series of arcuate notches **620, 621,** respectively, configured to align with the arcuate notches **611**, **612** in the upper and lower outer annular members **607**, **608.** Additionally, in the illustrated embodiment, the upper and lower cover plates **616, 617** each also include an access port **622**, **623**, respectively, (e.g., a hole) aligned (e.g., concentric) with the central input gear assembly **601**.

In the illustrated embodiment, the upper and lower cover plates **616**, **617** are wider than the upper and lower outer annular members **607, 608** (e.g., the outer diameter of the upper and lower cover plates **616, 617** is larger than the outer diameter of the upper and lower outer annular members **607**, **608**). Portions of the upper and lower cover plates **616, 617** that extend out beyond the upper and lower outer annular members **607, 608** include a series of openings **624**, **625**, respectively, (e.g., holes), the significance of which is described below.

Additionally, in the embodiment illustrated in FIGS. 6A and 6B, the adjustable negative stiffness mechanism **600** also includes an upper ortho-planar spring plate **626** and a lower ortho-planar spring plate **627** aligned with the upper ortho-planar spring plate **626**. The upper and lower cover plates **616**, **617**, the adjustable negative stiffness unit cells **500**, the central input gear assembly **601**, and the outer annular assembly **602** are disposed between the upper and lower ortho-planar spring plates **626**, **627**. In the illustrated embodiment, each of the upper and lower ortho-planar spring plates **626, 627** includes a series of ortho-planar springs **628, 629,** respectively. The ortho-planar springs **628**, **629** on the upper and lower ortho-planar spring plates **626, 627** are aligned with the adjustable negative stiffness unit cells **500**. Additionally, in the illustrated embodiment, center portions of the ortho-planar springs **628**, **629** are fixedly coupled to the center portions of the negative stiffness elements **503**. Accordingly, the ortho-planar springs **628**, **629** are configured to supply positive-stiffness to the adjustable negative stiffness mechanism **600**. In the illustrated embodiment, each of the ortho-planar springs **628**, **629** are defined by one or more spiral grooves defined in the upper and lower ortho-planar spring plates **626**, **627**.

Still referring to the embodiment illustrated in FIGS. 6A and 6B, each of the upper and lower ortho-planar spring plates **626, 627** defines an access port **630**, **631,** respectively, aligned with the access port **622**, **623** in the upper and lower cover plates **616**, **617**, respectively. Additionally, in the illustrated embodiment, the upper and lower ortho-planar spring plates **626, 627** also define a series of openings **632**, **633,** respectively, aligned with a portion of the arcuate notches **620**, **621** in the upper and lower cover plates **616, 617** and the arcuate notches **611**, **612** in the upper and lower outer annular members **607**, **608.**

In the illustrated embodiment, the adjustable negative stiffness mechanism **600** also includes a series of fasteners **634** coupling the upper ortho-planar spring plate **626** to the lower ortho-planar spring plate **627** and retaining the upper and lower cover plates **616**, **617**, the adjustable negative stiffness unit cells **500**, the central input gear assembly **601**, and the outer annular assembly **602** between the upper and lower ortho-planar spring plates **626**, **627.** In the illustrated embodiment, each of the fasteners **634** extends down through one of the openings **632** in the upper ortho-planar spring plate **626**, down through the arcuate notches **620**, **621** in the upper and lower cover plates **616, 617** and the arcuate notches **611**, **612** in the upper and lower outer annular members **607**, **608**, and down through a corresponding one of the openings **633** in the lower ortho-planar spring plate **627**. The fasteners **634** may be secured to the upper and lower ortho-planar spring plates **626, 627** by any suitable mechanism, such as, for instance, with nuts.

Additionally, the upper and lower ortho-planar spring plates **626**, **627** includes a series of openings **642**, **643** (e.g., holes), respectively, that are aligned with the openings **624**, **625** in the upper and lower cover plates **616**, **617**. Additionally, in the illustrated embodiment, the adjustable negative stiffness mechanism **600** includes a series of spacers **644** configured to extend through the openings **624**, **625** in the upper and lower cover plates **616, 617** and through the openings **642**, **643** in the upper and lower ortho-planar spring plates **626**, **627**. The spacers **644** are configured to align the upper and lower ortho-planar spring plates **626, 627** with the upper and lower cover plates **616**, **617**. In one or more embodiments, the spacers **644** are also configured to maintain a gap between the upper and lower cover plates **616, 617** and the outer annular assembly **602**, the adjustable negative stiffness unit cells **500**, and the central input gear assembly **601**. Otherwise, friction caused by coupling the upper cover plate **616** to the lower cover plate **617** may prevent or inhibit rotation of the outer annular assembly **602**, the adjustable negative stiffness unit cells **500**, and/or the central input gear assembly **601**, as described below.

As the central input gear assembly **601** is rotated in a first direction (arrow **635**), the teeth **605**, **606** on the upper and lower central gear plates **603, 604** engage the teeth **516, 517** on the upper and lower gear plates **508, 509** of each of the adjustable negative stiffness unit cells **500** and thereby cause the outer annular members **502** (e.g., the upper and lower gear plates **508**, **509**) of each of the adjustable negative stiffness unit cells **500** to simultaneously and synchronously rotate (arrow **636**) in a first direction. As the outer annular members **502** of the adjustable negative stiffness unit cells **500** are rotated (arrow **636**), the clamps **510** and the outer ends **507** of the negative stiffness elements **503** are advanced toward the second ends **514** of the tracks **511, 512** in the upper and lower gear plates **508**, **509**. As described above with reference to the embodiment of the adjustable negative stiffness unit cell **500** illustrated in FIGS. 5D, when the outer ends **507** of the negative stiffness elements **503** are positioned at the second ends **514** of the tracks **511, 512** in the outer annular members **502**, the negative stiffness elements **503** are in a compressed (e.g., buckled) state. Additionally, as the central input gear assembly **601** rotates (arrow **635**), the teeth **516, 517** on the upper and lower gear plates **508, 509** of the adjustable negative stiffness unit cells **500** engage the teeth **609**, **610** on the upper and lower outer annular members **607, 608** and thereby causes the outer annular assembly **602** to rotate (arrow **637**) in a direction opposite the direction in which the central input gear assembly **601** is rotating (arrow **635**).

As the central input gear assembly **601** is rotated in a second direction (arrow **638**) opposite the first direction (arrow **635**), the teeth **605**, **606** on the upper and lower central gear plates **603, 604** engage the teeth **516, 517** on the upper and lower gear plates **508, 509** of each of the adjustable negative stiffness unit cells **500** and thereby cause the outer annular members **502** of each of the adjustable negative stiffness unit cells **500** to simultaneously and synchronously rotate (arrow **639**) in a second direction opposite the first direction. As the outer annular members **502** of the adjustable negative stiffness unit cells **500** rotate (arrow **639**), the clamps **510** and the outer ends **507** of the negative stiffness elements **503** are advanced back toward the first ends **513** of the tracks **511**, **512** in the outer annular members **502.** As described above with reference to the embodiment of the adjustable negative stiffness unit cell **500** illustrated in FIGS. 5C, when the outer ends **507** of the negative stiffness elements **503** are positioned at the first ends **513** of the tracks **511, 512** in the outer annular members **502**, the negative stiffness elements **503** are in an elongated or relaxed (e.g., uncompressed) state. Additionally, as the central input gear assembly **601** rotates (arrow **638**), the teeth **516**, **517** on the upper and lower gear plates **508**, **509** engage the teeth **609**, **610** on the upper and lower outer annular members **607**, **608** and thereby causes the outer annular assembly **602** to rotate (arrow **640**) in a direction opposite the direction in which the central input gear assembly **601** is rotating (arrow **638**). The arcuate notches **611**, **612** in the upper and lower outer annular members **607**, **608** are configured to permit the upper and lower outer annular members **607**, **608** to rotate (arrows **637**, **640**) without contacting the fasteners **634.**

In this manner, the mechanical response of the plurality of the adjustable negative stiffness unit cells **500** may be simultaneously and synchronously adjusted by rotating the central input gear assembly **601** in the desired direction (arrow **635** or arrow **638**). Accordingly, the mechanical response of the plurality of the adjustable negative stiffness unit cells **500** may be simultaneously and synchronously adjusted by a single input. Together, the adjustable negative stiffness unit cells **500** and the central input gear assembly **601** function as a planetary gear mechanism.

In one or more embodiments, the central input gear assembly **601** may also include a crank **641** coupled to the upper and lower central gear plates **603**, **604** to facilitate adjusting the mechanical response of the adjustable negative stiffness unit cells **500.** For instance, in one or more embodiments, the crank **641** may extend down through the access ports **630**, **622** in the upper ortho-planar spring plate **626** and the upper cover plate **616** and be coupled to the upper and lower central gear plates **603**, **604**. In one or more embodiments, the central input gear assembly **601** may be coupled to an output shaft of a motor. The central input gear assembly **601** may be rotated (arrows **635**, **638**) either manually (e.g., by a hand crank) or automatically (e.g., by a motor).

While this invention has been described in detail with particular references to embodiments thereof, the embodiments described herein are not intended to be exhaustive or to limit the scope of the invention to the exact forms disclosed. Persons skilled in the art and technology to which this invention pertains will appreciate that alterations and changes in the described structures and methods of assembly and operation can be practiced without meaningfully departing from the principles, spirit, and scope of this invention. Although relative terms such as "horizontal," "vertical," "upper," "lower," "inner," "outer" and similar terms have been used herein to describe a spatial relationship of one element to another, it is understood that these terms are intended to encompass different orientations of the various elements and components of the invention in addition to the orientation depicted in the figures. Additionally, as used herein, the term "substantially" and similar terms are used as terms of approximation and not as terms of degree, and are intended to account for the inherent deviations in measured or calculated values that would be recognized by those of ordinary skill in the art. Moreover, the tasks described above may be performed in the order described or in any other suitable sequence. Additionally, the methods described above are not limited to the tasks described. Instead, for each embodiment, one or more of the tasks described above may be absent and/or additional tasks may be performed. Furthermore, as used herein, when a component is referred to as being "on" or "coupled to" another component, it can be directly on or attached to the other component or intervening components may be present therebetween.

## Claims

1. An adjustable negative stiffness mechanism, comprising:
a central shaft (301);
an outer annular member (302) extending around the central shaft (301);
at least two negative stiffness elements (303) extending between the central shaft (301) and the outer annular member (302), each of the at least two negative stiffness elements having an inner end (304) coupled to the central shaft and an outer end (305) engaging the outer annular member; and
an actuator coupled to the at least two negative stiffness elements (303), wherein the actuator is configured to compress and expand the at least two negative stiffness elements to adjust a negative stiffness mechanical response exhibited by the at least two negative stiffness elements, **characterized in that** the actuator (106) comprises:
an inner cam surface (310) on the annular member configured to engage the outer ends of the at least two negative stiffness elements, the inner cam surface comprising at least one peak (311) and at least one recess (312), and
a motor operatively coupled to the annular member to rotate the annular member around the central shaft, and wherein rotation of the annular member around the central shaft alternately aligns the at least one peak on the cam surface with the negative stiffness elements to compress the negative stiffness elements and aligns the at least one recess on the cam surface to expand the negative stiffness elements.

2. The adjustable negative stiffness mechanism of claim 1, wherein the actuator further comprises a flexure (306) coupled to the outer end of each of the at least two negative stiffness elements, and wherein each of the flexures is configured permit movement of the outer ends of the negative stiffness elements in a first direction and prevent movement of the outer ends of the negative stiffness elements in a second direction perpendicular to the first direction.

3. An adjustable negative stiffness mechanism, comprising:
a central shaft (501);
an outer annular member (502) extending around the central shaft (501);
at least two negative stiffness elements (503) extending between the central shaft (501) and the outer annular member (502), each of the at least two negative stiffness elements having an inner end (504) coupled to the central shaft and an outer end (505) engaging the outer annular member; and
an actuator coupled to the at least two negative stiffness elements (503), wherein the actuator is configured to compress and expand the at least two negative stiffness elements to adjust a negative stiffness mechanical response exhibited by the at least two negative stiffness elements
**characterized in that** the actuator comprises:
a plurality of tracks (511, 512) defined in the annular member, wherein each of the plurality of tracks has a first end (513) spaced apart from the central shaft by a first distance and a second end (514) spaced apart from the central shaft by a second distance greater than the first distance, wherein the outer end of each of the negative stiffness elements is slidably received in one of the plurality of tracks; and
a motor operatively coupled to the annular member to rotate the annular member around the central shaft and move the outer ends of the negative stiffness elements between the first and second ends of the tracks in the annular member.

4. The adjustable negative stiffness mechanism of claim 1 or 3, further comprising at least one ortho-planar spring (403, 626) extending between the central shaft and the outer annular member.

5. The adjustable negative stiffness mechanism of any of the preceding claims, further comprising at least one coil spring coupled to the central shaft.

6. The adjustable negative stiffness mechanism of claim 1 or 3, wherein each of the at least two negative stiffness elements comprises a first beam buckled in a first direction and a second plate buckled in a second direction opposite the first direction.

7. An adjustable negative stiffness system, comprising:
a central input gear assembly (601);
a plurality of adjustable negative stiffness mechanisms (500) arranged around the central input gear assembly,
wherein each of the plurality of adjustable negative stiffness mechanisms engages the central input gear assembly,
wherein each of the plurality of adjustable negative stiffness mechanisms is the adjustable negative stiffness mechanism of claim 3, and
an outer ring extending around the plurality of adjustable negative stiffness mechanisms, and wherein each of the plurality of adjustable negative stiffness mechanisms engages the outer ring.

8. The adjustable negative stiffness system of claim 7, further comprising a drive shaft coupled to the central input gear assembly to rotate the central input gear assembly, wherein rotation of the central input gear assembly synchronously rotates the outer annular members around the central shafts and moves the outer ends of the negative stiffness elements between the first and second ends of the tracks in the outer annular member.

9. The adjustable negative stiffness system of claim 7 or claim 8, wherein an outer surface of each the outer annular members of the plurality of negative stiffness mechanisms comprises a plurality of teeth configured to engage a plurality of teeth on an inner surface of the outer ring and a plurality of teeth on outer surface of the central input gear assembly.

10. The adjustable negative stiffness mechanism of claim 2, further comprising:
wherein the inner cam surface comprising a plurality of peaks and a plurality of recesses,
wherein rotation of the outer annular member around the central shaft alternately aligns the plurality of peaks on the inner cam surface with the outer ends of the negative stiffness elements to compress the negative stiffness elements and aligns the plurality of recesses on the inner cam surface with the outer ends of the negative stiffness elements to expand the negative stiffness elements.

11. The adjustable negative stiffness mechanism of claim 10, further comprising:
an ortho-planar spring (403) coupled to the central shaft;
a top plate (410) coupled to the central shaft;
a bottom plate (411) spaced apart from the top plate, wherein the bottom plate is configured to slide along the central shaft;
at least one coil spring (412) extending between the bottom plate and the top plate;
a second motor operatively coupled to the bottom plate, wherein the second motor is configured to move the bottom plate toward and away from the top plate to compress and elongate the at least one coil spring;
a thrust bearing (416); and
a coil spring container (413) rotatably supported on the thrust bearing, the coil spring container comprising internal threads configured to engage external threads on the bottom plate, wherein the second motor is configured to rotate the coil spring container such that the external threads engage the internal threads to move the bottom plate toward and away from the top plate to compress and elongate the at least one coil spring.

12. The adjustable negative stiffness mechanism of claim 11, further comprising a containment vessel (401), wherein the containment vessel houses the outer annular member, the at least two negative stiffness elements, the flexures, the top plate, the bottom plate, and the at least one coil spring, and wherein the first and second motors are coupled to an outer surface of the containment vessel.

## Patentansprüche

1. Einstellbarer negativer Steifigkeitsmechanismus, mit:
einer Mittelachse (301);
einem äußeren Ringelement (302), das sich um die Mittelachse (301) erstreckt;
mindestens zwei negativen Steifigkeitselementen (303), die sich zwischen der Mittelachse (301) und dem äußeren Ringelement (302) erstrecken, wobei jedes der mindestens zwei negativen Steifigkeitselemente ein inneres Ende (304), das mit der Mittelachse verbunden ist, und ein äußeres Ende (305) aufweist, das mit dem äußeren Ringelement in Eingriff ist; und
einem Aktuator, der mit den mindestens zwei negativen Steifigkeitselementen (303) verbunden ist, wobei der Aktuator ausgebildet ist, die mindestens zwei negativen Steifigkeitselemente zu komprimieren und zu strecken derart, dass eine negative mechanische Steifigkeitsreaktion, die von den mindestens zwei negativen Steifigkeitselementen bereitgestellt wird, eingestellt wird, **dadurch gekennzeichnet, dass** der Aktuator (106) aufweist:
eine Innennockenfläche (310) auf dem Ringelement, die ausgebildet ist, in die äußeren Enden der mindestens zwei negativen Steifigkeitselemente einzugreifen, wobei die Innennockenfläche mindestens eine Erhebung (311) und mindestens eine Vertiefung (312) aufweist, und
einen Motor, der funktionsmäßig mit dem Ringelement verbunden ist, um das Ringelement um die Mittelachse in Drehung zu versetzen, und wobei Drehung des Ringelements um die Mittelachse abwechselnd die mindestens eine Erhebung auf der Nockenfläche zu den negativen Steifigkeitselementen ausrichtet derart, dass die negativen Steifigkeitselemente komprimiert werden, und die mindestens eine Vertiefung auf der Nockenfläche derart ausrichtet, dass die negativen Steifigkeitselemente gestreckt werden.

2. Einstellbarer negativer Steifigkeitsmechanismus nach Anspruch 1, wobei der Aktuator ferner eine Biegung (306) aufweist, die mit dem äußeren Ende jeweils der mindestens zwei negativen Steifigkeitselemente verbunden ist, und wobei jede der Biegungen ausgebildet ist, eine Bewegung der äußeren Enden der negativen Steifigkeitselemente in einer ersten Richtung zuzulassen und eine Bewegung der äußeren Enden der negativen Steifigkeitselemente in einer zweiten Richtung, die senkrecht zu der ersten Richtung verläuft, zu hemmen.

3. Einstellbarer negativer Steifigkeitsmechanismus, mit:
einer Mittelachse (501);
einem äußeren Ringelement (502), das sich um die Mittelachse (501) erstreckt;
mindestens zwei negativen Steifigkeitselementen (503), die sich zwischen der Mittelachse (501) und dem äußeren Ringelement (502) erstrecken, wobei jedes der mindestens zwei negativen Steifigkeitselemente ein inneres Ende (504), das mit der Mittelachse verbunden ist, und ein äußeres Ende (505), das mit dem äußeren Ringelement in Eingriff ist, aufweist; und
einem Aktuator, der mit den mindestens zwei negativen Steifigkeitselementen (503) verbunden ist, wobei der Aktuator ausgebildet ist, die mindestens zwei negativen Steifigkeitselemente derart zu komprimieren und zu strecken, dass eine negative mechanische Steifigkeitsreaktion, die von den mindestens zwei negativen Steifigkeitselementen bereitgestellt wird, eingestellt wird,
**dadurch gekennzeichnet, dass** der Aktuator aufweist:
mehrere Bahnen (511, 512), die in dem Ringelement gebildet sind, wobei jede der mehreren Bahnen ein erstes Ende (513), das von der Mittelachse einen ersten Abstand hat, und ein zweites Ende (514) aufweist, das von der Mittelachse einen zweiten Abstand hat, der größer ist als der erste Abstand, wobei das äußere Ende jedes der negativen Steifigkeitselemente in einer der mehreren Bahnen verschiebbar aufgenommen ist; und
einen Motor, der funktionsmäßig mit dem Ringelement verbunden ist, um das Ringelement um die Mittelachse in Drehung zu versetzen und die äußeren Enden der negativen Steifigkeitselemente zwischen dem ersten und dem zweiten Ende der Bahnen in dem Ringelement zu bewegen.

4. Einstellbarer negativer Steifigkeitsmechanismus nach Anspruch 1 oder 3, der ferner mindestens eine ortho-planare Feder (403, 626), die sich zwischen der Mittelachse und dem äußeren Ringelement erstreckt, aufweist.

5. Einstellbarer negativer Steifigkeitsmechanismus nach einem der vorhergehenden Ansprüche, der ferner mindestens eine Spiralfeder, die mit der Mittelachse verbunden ist, aufweist.

6. Einstellbarer negativer Steifigkeitsmechanismus nach Anspruch 1 oder 3, wobei jedes der mindestens zwei negativen Steifigkeitselemente einen ersten Holm, der in einer ersten Richtung gekrümmt ist, und eine zweite Platte, die in einer zweiten Richtung entgegengesetzt zur ersten Richtung gekrümmt ist, aufweist.

7. Einstellbares negatives Steifigkeitssystem, mit:
einer Mitteleingangszahnradanordnung (601);
mehreren einstellbaren negativen Steifigkeitsmechanismen (500), die um die Mitteleingangszahnradanordnung herum angeordnet sind,
wobei jeder der mehreren einstellbaren negativen Steifigkeitsmechanismen mit der Mitteleingangszahnradanordnung in Eingriff ist,
wobei jeder der mehreren einstellbaren negativen Steifigkeitsmechanismen der einstellbare negative Steifigkeitsmechanismus nach Anspruch 3 ist, und
einem Außenring, der sich um die mehreren einstellbaren negativen Steifigkeitsmechanismen erstreckt, und wobei jeder der mehreren einstellbaren negativen Steifigkeitsmechanismen mit dem Außenring in Eingriff ist.

8. Einstellbares negatives Steifigkeitssystem nach Anspruch 7, das ferner eine Antriebswelle aufweist, die mit der Mitteleingangszahnradanordnung derart verbunden ist, dass die Mitteleingangszahnradanordnung in Drehung versetzbar ist, wobei eine Drehung der Mitteleingangszahnradanordnung synchron die äußeren Ringelemente um die Mittelachsen herum in Drehung versetzt und die äußeren Enden der negativen Steifigkeitselemente zwischen den ersten und zweiten Enden der Bahnen in dem äußeren Ringelement hin und her bewegt.

9. Einstellbares negatives Steifigkeitssystem nach Anspruch 7 oder Anspruch 8, wobei eine Außenfläche jeweils der äußeren Ringelemente der mehreren negativen Steifigkeitsmechanismen mehrere Zähne aufweist, die ausgebildet sind, mit mehreren Zähnen auf einer Innenfläche des Außenrings und mehreren Zähnen auf der Außenfläche der Mitteleingangszahnradanordnung in Eingriff zu treten.

10. Einstellbarer negativer Steifigkeitsmechanismus nach Anspruch 2, in welchem:
die Innennockenfläche mehrere Erhebungen und mehrere Vertiefungen aufweist,
wobei eine Drehung des äußeren Ringelements um die Mittelachse abwechselnd die mehreren Erhebungen auf der Innennockenfläche zu den äußeren Enden der negativen Steifigkeitselemente zum Komprimieren der negativen Steifigkeitselemente ausrichtet und die mehreren Vertiefungen auf der Innennockenfläche mit den äußeren Enden der negativen Steifigkeitselemente zur Streckung der negativen Steifigkeitselemente ausrichtet.

11. Der einstellbare negative Steifigkeitsmechanismus nach Anspruch 10, der ferner aufweist:
eine ortho-planare Feder (403), die mit der Mittelachse verbunden ist;
eine obere Platte (410), die mit der Mittelachse verbunden ist;
eine Bodenplatte (411), die zu der oberen Platte einen Abstand hat, wobei die Bodenplatte zur Gleitbewegung entlang der Mittelachse ausgebildet ist;
mindestens eine Spiralfeder (412), die sich zwischen der Bodenplatte und der oberen Platte erstreckt;
einen zweiten Motor, der funktionsmäßig mit der Bodenplatte verbunden ist, wobei der zweite Motor ausgebildet ist, die Bodenplatte in Richtung zu und weg von der oberen Platte zu verschieben, um die mindestens eine Spiralfeder zu komprimieren und zu dehnen;
ein Drucklager (416); und
einen Spiralfederbehälter (413), der auf dem Drucklager drehbar gehalten wird, wobei der Spiralfederbehälter Innengewinde aufweist, die ausgebildet sind, mit Außengewinden auf der Bodenplatte in Eingriff zu treten, wobei der zweite Motor ausgebildet ist, den Spiralfederbehälter derart in Drehung zu versetzen, dass die Außengewinde mit den Innengewinden in Eingriff treten, so dass die Bodenplatte in Richtung zu und weg von der oberen Platte zum Komprimieren und Dehnen der mindestens einen Spiralfeder bewegt wird.

12. Einstellbarer negativer Steifigkeitsmechanismus nach Anspruch 11, der ferner ein Aufnahmegehäuse (401) aufweist, wobei das Aufnahmegehäuse das äußere Ringelement, die mindestens zwei negativen Steifigkeitselemente, die Biegungen, die obere Platte, die Bodenplatte und die mindestens eine Spiralfeder beherbergt, und wobei der erste und der zweite Motor mit einer Außenfläche des Aufnahmegehäuses verbunden sind.

## Revendications

1. Mécanisme à rigidité négative réglable, comprenant :
un arbre central (301) ;
un élément annulaire extérieur (302) s'étendant autour de l'arbre central (301) ;
au moins deux éléments à rigidité négative (303) s'étendant entre l'arbre central (301) et l'élément annulaire extérieur (302), chacun desdits au moins deux éléments à rigidité négative ayant une extrémité intérieure (304) couplée à l'arbre central et une extrémité extérieure (305) s'engageant dans l'élément annulaire extérieur ; et
un actionneur couplé auxdits au moins deux éléments à rigidité négative (303), dans lequel l'actionneur est configuré pour comprimer et dilater lesdits au moins deux éléments à rigidité négative pour ajuster une réponse mécanique à rigidité négative présentée par lesdits au moins deux éléments à rigidité négative, **caractérisé en ce que** l'actionneur (106) comprend :
une surface de came intérieure (310) sur l'élément annulaire configurée pour venir en prise avec les extrémités extérieures desdits au moins deux éléments à rigidité négative, la surface de came intérieure comprenant au moins un pic (311) et au moins un évidement (312), et
un moteur couplé de manière opérationnelle à l'élément annulaire pour faire tourner l'élément annulaire autour de l'arbre central, et dans lequel la rotation de l'élément annulaire autour de l'arbre central aligne alternativement ledit au moins un pic sur la surface de la came avec les éléments à rigidité négative pour comprimer les éléments à rigidité négative et aligne ledit au moins un évidement sur la surface de la came pour étendre les éléments à rigidité négative.

2. Mécanisme à rigidité négative réglable selon la revendication 1, dans lequel l'actionneur comprend en outre un élément de flexion (306) couplé à l'extrémité extérieure de chacun desdits au moins deux éléments à rigidité négative, et dans lequel chacun des éléments de flexion est configuré pour permettre le mouvement des extrémités extérieures des éléments à rigidité négative dans une première direction et empêcher le mouvement des extrémités extérieures des éléments à rigidité négative dans une seconde direction perpendiculaire à la première direction.

3. Mécanisme à rigidité négative réglable, comprenant :
un arbre central (501) ;
un élément annulaire extérieur (502) s'étendant autour de l'arbre central (501) ;
au moins deux éléments à rigidité négative (503) s'étendant entre l'arbre central (501) et l'élément annulaire externe (502), chacun desdits au moins deux éléments à rigidité négative ayant une extrémité interne (504) couplée à l'arbre central et une extrémité externe (505) engageant l'élément annulaire externe ; et
un actionneur couplé auxdits au moins deux éléments à rigidité négative (503), dans lequel l'actionneur est configuré pour comprimer et dilater lesdits au moins deux éléments à rigidité négative pour ajuster une réponse mécanique à rigidité négative présentée par lesdits au moins deux éléments à rigidité négative
**caractérisé en ce que** l'actionneur comprend :
une pluralité de pistes (511, 512) définies dans l'élément annulaire, dans laquelle chacune de la pluralité de pistes présente une première extrémité (513) espacée de l'arbre central d'une première distance et une seconde extrémité (514) espacée de l'arbre central d'une seconde distance supérieure à la première distance, dans laquelle l'extrémité extérieure de chacun des éléments à rigidité négative est reçue de manière coulissante dans l'une de la pluralité de pistes ; et
un moteur couplé de manière opérationnelle à l'élément annulaire pour faire tourner l'élément annulaire autour de l'arbre central et déplacer les extrémités extérieures des éléments à rigidité négative entre les première et seconde extrémités des pistes dans l'élément annulaire.

4. Mécanisme à rigidité négative réglable selon les revendications 1 ou 3, comprenant en outre au moins un ressort ortho-planaire (403, 626) s'étendant entre l'arbre central et l'élément annulaire extérieur.

5. Mécanisme à rigidité négative réglable selon l'une quelconque des revendications précédentes, comprenant en outre au moins un ressort hélicoïdal couplé à l'arbre central.

6. Mécanisme à rigidité négative réglable selon les revendications 1 ou 3, dans lequel chacun desdits au moins deux éléments à rigidité négative comprend une première poutre déformée dans une première direction et une seconde plaque déformée dans une seconde direction opposée à la première direction.

7. Système à rigidité négative réglable, comprenant :
un ensemble d'engrenage d'entrée central (601) ;
une pluralité de mécanismes à rigidité négative réglables (500) disposés autour de l'ensemble d'engrenage d'entrée central,
dans lequel chacun de la pluralité de mécanismes à rigidité négative ajustable engage l'ensemble d'engrenage d'entrée central,
dans lequel chacun de la pluralité de mécanismes à rigidité négative réglable est le mécanisme à rigidité négative réglable de la revendication 3, et
un anneau extérieur s'étendant autour de la pluralité de mécanismes à rigidité négative ajustables,
et dans lequel chacun de la pluralité de mécanismes à rigidité négative ajustables s'engage dans l'anneau extérieur.

8. Système à rigidité négative réglable selon la revendication 7, comprenant en outre un arbre d'entraînement couplé à l'ensemble d'engrenages d'entrée central pour faire tourner l'ensemble d'engrenages d'entrée central, dans lequel la rotation de l'ensemble d'engrenages d'entrée central fait tourner de manière synchrone les éléments annulaires extérieurs autour des arbres centraux et déplace les extrémités extérieures des éléments à rigidité négative entre les première et seconde extrémités des pistes dans l'élément annulaire extérieur.

9. Système à rigidité négative réglable selon la revendication 7 ou la revendication 8, dans lequel une surface extérieure de chacun des éléments annulaires extérieurs de la pluralité de mécanismes à rigidité négative comprend une pluralité de dents configurées pour s'engager avec une pluralité de dents sur une surface intérieure de la bague extérieure et une pluralité de dents sur une surface extérieure de l'ensemble d'engrenage d'entrée central.

10. Mécanisme à rigidité négative réglable de la revendication 2, comprenant en outre :
dans lequel la surface de came intérieure comprend une pluralité de pics et une pluralité d'évidements, dans lequel la rotation de l'élément annulaire extérieur autour de l'arbre central aligne alternativement la pluralité de pics sur la surface de came intérieure avec les extrémités extérieures des éléments à rigidité négative pour comprimer les éléments à rigidité négative et aligne la pluralité d'évidements sur la surface de came intérieure avec les extrémités extérieures des éléments à rigidité négative pour étendre les éléments à rigidité négative.

11. Mécanisme à rigidité négative réglable selon la revendication 10, comprenant en outre :
un ressort ortho-planaire (403) couplé à l'arbre central ;
une plaque supérieure (410) couplée à l'arbre central ;
une plaque inférieure (411) espacée de la plaque supérieure, dans laquelle la plaque inférieure est configurée pour glisser le long de l'arbre central ;
au moins un ressort hélicoïdal (412) s'étendant entre la plaque inférieure et la plaque supérieure ;
un second moteur couplé de manière opérationnelle à la plaque inférieure, dans lequel le second moteur est configuré pour déplacer la plaque inférieure vers et à l'écart de la plaque supérieure pour comprimer et allonger ledit au moins un ressort hélicoïdal ;
un palier de butée (416) ; et
un conteneur de ressort hélicoïdal (413) supporté de manière rotative sur le palier de butée, le conteneur de ressort hélicoïdal comprenant des filetages internes configurés pour s'engager dans des filetages externes sur la plaque inférieure, dans lequel le second moteur est configuré pour faire tourner le conteneur de ressort hélicoïdal de sorte que les filetages externes s'engagent dans les filetages internes pour déplacer la plaque inférieure vers et à l'écart de la plaque supérieure pour comprimer et allonger ledit au moins un ressort hélicoïdal.

12. Mécanisme à rigidité négative réglable selon la revendication 11, comprenant en outre un récipient de confinement (401), dans lequel le récipient de confinement loge l'élément annulaire extérieur, lesdits au moins deux éléments à rigidité négative, les flexions, la plaque supérieure, la plaque inférieure et ledit au moins un ressort hélicoïdal, et dans lequel les premier et second moteurs sont couplés à une surface extérieure du récipient de confinement.
